# EUROPEAN PATENT APPLICATION

(11) **EP 4 715 018 A1**
(43) Date of publication of application: **25.03.2026**
(21) Application number: 25202700.8
(22) Date of filing: 17.09.2025
(51) Int. Cl.: C09D 5/00

(54) **PAINT COMPOSITION**

(30) Priority: 23.09.2024 US 202463697658 P
(71) Applicant: Nouryon Chemicals International B.V., 1101 BZ Amsterdam (NL)
(72) Inventor: RODRIGUES, Klin Aloysius, 1101 BZ Amsterdam (NL); SZCYPULA BUONO, Celia Regina, 1101 BZ Amsterdam (NL)
(74) Representative: Ingrassia, Fisher & Lorenz UK Ltd.

(57) **Abstract**

A paint composition includes water and/or an organic solvent; at least one of a binder or a pigment; and an additive that includes a first polymer and/or a second polymer. The first polymer includes the reaction product of: at least one ethylenically unsaturated monomer and a second reactant chosen from monosaccharides, disaccharides, oligosaccharides, polysaccharides and combinations thereof. The second polymer has the structure (I): 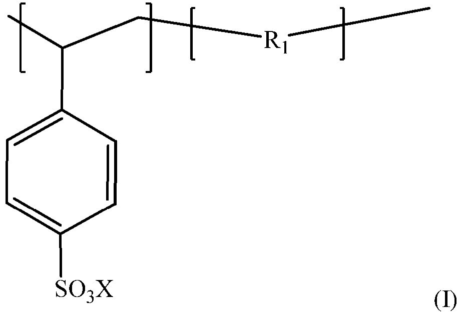 wherein R₁ is a residue from an ethylenically unsaturated monomer, R₁ can be present or absent, and X is H, a cation, or an amine. The sum of the weight percent actives of the first polymer and/or the second polymer is from about 0.1 to about 20 weight percent actives based on a total weight of the paint composition.

## Description

### CROSS-REFERENCE TO RELATED APPLICATIONS

This application claims the benefit of U.S. Provisional Application No. 63/697,658 filed on September 23, 2024, which is hereby expressly incorporated herein by reference in its entirety.

### TECHNICAL FIELD

This disclosure generally relates to a paint composition including a particular additive. More specifically, the additive can include a first polymer formed using a monosaccharide, disaccharide, oligosaccharide, and/or polysaccharide and/or a second polymer that includes a styrene sulfonate residue.

### BACKGROUND

In paint compositions, dirt pickup resistance and block resistance are two important properties that influence the paint composition's durability, aesthetic longevity, and performance in different environments.

Dirt pickup resistance (DPUR) refers to the paint composition's ability to resist the accumulation of dirt, dust, and other contaminants on its surface after application. This is particularly important for exterior paint compositions, although it is also valuable for interior paint compositions in high-traffic areas.

Dirt pickup resistance helps maintain the paint composition's original appearance, as the composition does not get dirty easily. This reduces the frequency of cleaning or repainting. In addition, accumulated dirt can trap moisture or foster mildew and mold growth, which can degrade the paint composition and the underlying surface over time. A paint composition with high dirt pickup resistance protects the surface for longer periods of time than paint compositions with lower dirt pickup resistance.

In some cases, especially for exterior surfaces, darker surfaces that attract dirt may also absorb more heat. Dirt-resistant paint compositions can help manage heat reflection or absorption better, depending on the intended use. To enhance dirt pickup resistance, paint manufacturers often use specialized additives. For example, dirt-resistant paint compositions often include additives that repel dirt and water. Without these additives, dirt can adhere more easily to the paint composition surface.

In other situations, manufacturers use per- and poly-fluoroalkyl substances (PFAS) which are known to deliver dirt pick up resistance to paint formulations. However, these chemicals do not degrade easily in the environment. For this reason, there is a market wide need to deliver well performing paint compositions without using these fluorinated chemicals.

Paint compositions may also lack good dirt pickup resistance due to several factors related to composition, application techniques, and environmental conditions. For example, low-quality binders and resins may contribute to this problem. Binders are responsible for forming a film from the paint composition and providing adhesion of the film to the surface. If the binder quality is low or incompatible with the environment, the paint composition surface may not form a smooth, nonporous film, making it easier for dirt and dust to accumulate.

Some paint compositions may form films that have porous or rough surface textures, which can trap dirt and contaminants. Lower-quality paint compositions or paint compositions not designed for smooth finishes can be more prone to attracting and holding onto dirt.

Moreover, if the paint composition does not cure properly or is applied in an environment that does not allow it to form a proper film (e.g. due to high humidity or low temperature), the paint composition can affect the surface texture and cause more dirt to stick. Accordingly, there remains a need to develop a paint composition that has improved dirt pickup resistance, that reduces the aforementioned reasons for composition failure, and that is environmentally friendly.

Block resistance refers to an ability of the paint composition to resist sticking to itself or other surfaces when pressed together under heat and pressure. This can be important in situations where painted surfaces come into contact with each other, such as in door frames or windowsills or on furniture. When painted surfaces come into contact with each other, poor block resistance can lead to the surfaces sticking together. This can cause peeling, flaking, or damage when the surfaces are separated. High block resistance ensures that newly painted surfaces can be used sooner with less concern for sticking, making a space functional more quickly after painting.

In environments with high temperatures or humidity, paint compositions without good block resistance are more prone to tackiness and sticking, especially with doors or windows. Block resistance is particularly important for glossy or semi-gloss finishes, as these paint compositions tend to be more prone to sticking when pressure is applied.

Block resistance issues can arise from many factors related to paint composition formulation and environmental exposure. For example, paint compositions with soft or flexible binders (common in some acrylics and latex paint compositions) can remain tacky or sticky after curing, especially when contacted with each other under pressure. This is more common in high-gloss or semi-gloss paint compositions, where the surface remains soft for longer periods.

Plasticizers are additives used to make paint composition films more flexible and improve adhesion. However, excessive plasticizer content can soften a paint film, leading to poor block resistance, as the surfaces become more prone to sticking. High temperatures and humidity can soften paint composition films, leading to tackiness and poor block resistance. This is common in bathrooms, kitchens, and in hot climates, where constant exposure to heat or moisture weakens the paint film.

In addition, paint compositions formulated with low-quality resins or binders might not form a strong film, making them more prone to sticking when two painted surfaces come into contact under pressure.

Accordingly, there remains a need to develop a paint composition that has improved blocking resistance and that reduces the aforementioned reasons for composition failure and to do so without the use of per- and poly-fluoroalkyl substances. Other desirable features and characteristics of the present disclosure will become apparent from the subsequent detailed description of the disclosure and the appended claims, taken in conjunction with the background of the disclosure.

### BRIEF SUMMARY

This disclosure provides a paint composition that includes water and/or an organic solvent; at least one of a binder or a pigment; and an additive that includes a first polymer and/or a second polymer. The first polymer includes the reaction product of: at least one ethylenically unsaturated monomer and a second reactant chosen from monosaccharides, disaccharides, oligosaccharides, polysaccharides and combinations thereof. The second polymer has the structure (I): 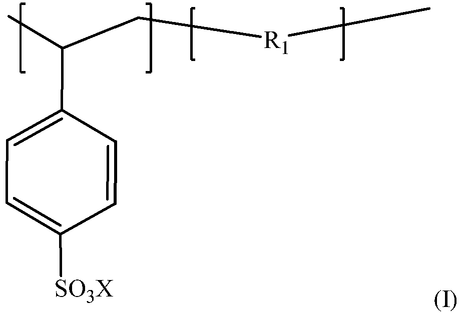 wherein R₁ is a residue from an ethylenically unsaturated monomer, R₁ can be present or absent, and X is H, a cation, or an amine. The sum of the weight percent actives of the first polymer and/or the second polymer is from about 0.1 to about 20 weight percent actives based on a total weight of the paint composition.

### DETAILED DESCRIPTION

The following detailed description is merely exemplary in nature and is not intended to limit the current composition. Furthermore, there is no intention to be bound by any theory presented in the preceding background or the following detailed description.

Embodiments of the present disclosure are generally directed to polymers, compositions including the same, and methods for forming the same. For the sake of brevity, conventional techniques related to making polymers and such compositions may not be described in detail herein. Moreover, the various tasks and process steps described herein may be incorporated into a more comprehensive procedure or process having additional steps or functionality not described in detail herein. In particular, various steps in the manufacture of polymers and associated compositions are well-known and so, in the interest of brevity, many conventional steps will only be described briefly herein or will be omitted entirely without providing the well-known process details.

In this disclosure, the terminology "about" can describe values ± 0.1, 0.5, 1, 2, 3, 4, 5, 6, 7, 8, 9, or 10%, in various embodiments. Moreover, it is contemplated that, in various non-limiting embodiments, it is to be appreciated that all numerical values as provided herein, save for the actual examples, are approximate values with endpoints or particular values intended to be read as "about" or "approximately" the value as recited. It is also contemplated that all isomers and chiral options for each compound described herein are hereby expressly contemplated for use herein in various non-limiting embodiments. Moreover, in this disclosure, the subscripts of non-chemical elements, e.g. (R₁, R₂, etc.) do not indicate that more than 1 group (e.g. R group) is present. They are used merely to differentiate between groups. However, the subscripts for chemical elements such as carbon (e.g. C₁-C₂₂) are indicative of the total number of atoms of that chemical element.

Throughout this disclosure, the terminology percent "actives" is well recognized in the art and means the percent amount of active or actual compound or molecule present as compared to, for example, a total weight of a diluted solution of a solvent and such a compound. Some compounds, such as a solvent, are not described relative to a percent actives because it is well known to be approximately 100% actives. Any one or more of the values described herein may be alternatively described as percent actives as would be understood by the skilled person.

In various embodiments, the terminology "free of" describes embodiments that include less than about 5, 4, 3, 2, 1, 0.5, or 0.1, weight percent (or weight percent actives) of the compound or element at issue using an appropriate weight basis as would be understood by one of skill in the art. In other embodiments, the terminology "free of" describes embodiments that have zero weight percent of the compound or element at issue.

The terminology "consists essentially of" may describe various non-limiting embodiments that are free of one or more optional compounds described herein and/or free of one or more polymers, surfactants, additives not required herein, solvents, etc.

It is to be understood that the subscripts of polymers are typically described as average values because the synthesis of polymers typically produces a distribution of various individual molecules.

The polymers and compositions disclosed herein may suitably comprise, consist of, or consist essentially of the components, elements, and process delineations described herein. The embodiments illustratively disclosed herein suitably may be practiced in the absence of any element which is not specifically disclosed herein.

### Paint Composition

This disclosure provides a paint composition that includes water and/or an organic solvent; at least one of a binder or a pigment; and an additive that includes a first polymer and/or a second polymer. The first polymer includes the reaction product of: at least one ethylenically unsaturated monomer and a second reactant chosen from monosaccharides, disaccharides, oligosaccharides, polysaccharides and combinations thereof. The second polymer has the structure (I): 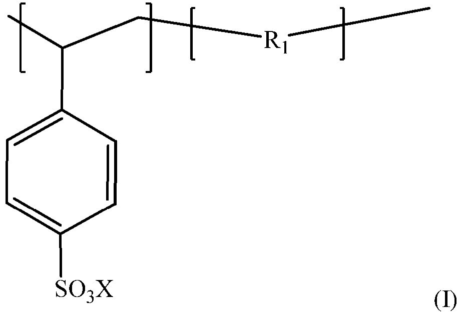 wherein R₁ is a residue from an ethylenically unsaturated monomer, R₁ can be present or absent, and X is H, a cation, or an amine. The sum of the weight percent actives of the first polymer and/or the second polymer is from about 0.1 to about 20 weight percent actives based on a total weight of the paint composition.

The paint composition may be alternatively described as the "composition" herein. In one embodiment, the paint composition is described as a coating composition. The paint composition is not particularly limited in terms of use or application. For example, the paint composition may be alternatively described as an aqueous paint composition or as a solvent based paint composition. Alternatively, the paint composition may be used as one component in a larger and otherwise aqueous or solvent based paint composition.

Typically, the composition is free of, or includes less than 5, 4, 3, 2, 1, 0.5, or 0.1, weight percent of one or more per- and poly-fluoroalkyl compounds, based on a total weight of the composition. For example, these compounds may include perfluorooctanoic acid (PFOA), perfluorooctane sulfonate (PFOS), perfluorobutanesulfonic acid (PFBS), perfluorohexanoic acid (PFHxA), polytetrafluoroethylene (PTFE), fluorotelomer alcohols (FTOHs), perfluorodecanoic acid (PFDA), perfluorononanoic acid (PFNA), perfluorohexane sulfonate (PFHxS), perfluorooctyl iodide (PFOI), or combinations thereof.

### Water and/or Solvent

The paint composition includes water and/or a solvent. Alternatively, both water and a solvent may be utilized. In various embodiments, a solvent may be used which may be water itself or may be a combination of water and water miscible solvents. The solvent may be described as any polar solvent known in the art. For example, the polar solvent may be or include an alcohol such as ethanol or methanol, butanol, isobutanol, acetone, methyl ethyl ketone, isopropanol, n-propanol, acetonitrile, DMSO (dimethyl sulfoxide), DMF (dimethyl formamide), ether alcohols, butyl cellosolve, dipropyleneglycol monomethylether, or combinations thereof. In one embodiment, the solvent is water without any additional polar solvent.

In other embodiments, the solvent may be or include an organic solvent which may be polar or non-polar. The organic solvent may be present as a primary solvent or as a co-solvent, e.g. with water or a polar solvent. In one embodiment, no (organic) solvent is used. In various embodiments, glycols can be used as open time extenders in compositions such as aqueous paint compositions. Moreover, coalescents such as Texanol can also be used, e.g. Texanol 25265-77-4 77-68-9 3-Hydroxy-2,2,4-trimethylpentyl isobutyrate 2,2,4-Trimethyl-1,3-pentanediol monoisobutyrate.

However, if an organic solvent is used, the solvent may be a polar organic liquid such as an ether, especially lower alkyl ethers, esters, ketones, glycols, alcohols, amides, or combinations thereof. In one embodiment, polar organic liquids include dialkyl ketones, alkyl esters of alkane carboxylic acids and alkanols, especially such liquids including up to, and including, a total of 6 or 8 carbon atoms. Examples of the polar organic liquids include dialkyl and cycloalkyl ketones, such as acetone, methyl ethyl ketone, diethyl ketone, di-isopropyl ketone, methyl isobutyl ketone, di-isobutyl ketone, methyl ketone, methyl n-amyl ketone and cyclohexanone; alkyl esters such as methyl acetate, ethyl acetate, isopropyl acetate, butyl acetate, ethyl formate, methyl propionate, methoxypropyl acetate and ethyl butyrate; glycols and glycol esters and ethers, such as ethylene glycol, 2-ethoxyethanol, 3-methoxypropylpropanol, 3-ethoxypropylpropanol, 2-butoxyethyl acetate, 3-methoxypropyl acetate, 3-ethoxypropyl acetate and 2-ethoxyethyl acetate; alcohols such as methanol, ethanol, n-propanol, isopropanol, n-butanol and isobutanol and dialkyl and cyclic ethers such as diethyl ether and tetrahydrofuran, and combinations thereof. In one embodiment, solvents such as alcohols, and esters of alkane carboxylic acids may be used. The polar organic liquid may include methanol, ethanol, n-propanol, isopropanol, n-butanol and isobutanol, or mixtures thereof.

In various embodiments, the composition includes water (and/or the solvent) present in an amount of at least about 1, 5, 10, 15, 20, 25, 30, 35, 40, 45, 50, 55, 60, 65, 70, 75, 80, 85, 90, 95, or even greater, weight percent based on a total weight of the composition. In other embodiments, water (and/or the solvent) is present in an amount of from about 5 to about 95, about 5 to about 90, about 5 to about 85, about 10 to about 80, about 15 to about 75, about 20 to about 70, about 25 to about 65, about 30 to about 60, about 35 to about 55, about 40 to about 50, or about 45 to about 50, weight percent based on a total weight of the composition. In various non-limiting embodiments, all whole and fractional values and ranges of whole and fractional values including and between each value set forth above, are hereby expressly contemplated for use herein. Binder

Referring now to the optional binder, the composition may include the binder or be free of the binder. The term "binder" typically refers to a film forming component of the paint composition. Typically, a binder can include polymers, oligomers, or a combination thereof that are used to form a coating or film having desired properties, such as hardness, protection, adhesion, and others. Additional components, such as carriers, pigments, catalysts, rheology modifiers, antioxidants, UV stabilizers and absorbers, leveling agents, antifoaming agents, anti-cratering agents, etc. may or may not be included in the term "binder" unless one or more of these additional components are film forming constituents of the composition.

The film forming component can include any curable water-dispersible or latex polymer. A "latex" polymer means a dispersion of polymer particles in water. A latex polymer typically requires a secondary dispersing agent (e.g. a surfactant, polymeric colloid) for creating a dispersion or emulsion of polymer particles in water. A "water-dispersible" polymer means the polymer is itself capable of being dispersed into water (i.e., without requiring the use of a separate surfactant) or water can be added to the polymer to form a stable aqueous dispersion (i.e., the dispersion should have at least one month shelf stability at normal storage temperatures). Such water-dispersible polymers can include nonionic or anionic functionality on the polymer, which assist in rendering them water-dispersible. For such polymers, external acids or bases are typically used for anionic stabilization.

The binder may alternatively be chosen from a polyester-polyurethane polymer, a latex polymer, a melamine resin, and combinations thereof. It is to be appreciated that other polymers may be included in the composition or omitted therefrom.

Latex polymers, such as aqueous latex binders and their production, are well known to the skilled person. Aqueous (meth)acryl copolymer latex binders can typically be made by free-radical emulsion copolymerization of olefinically unsaturated free-radically copolymerizable comonomers. Typical latex binders used in paints are acrylics, vinyl -acrylic, styrene acrylics, ethylene-vinyl acetate, vinyl acetate, alkyd, vinyl chloride, styrene-butadiene, vinyl versatate, vinyl acetate-maleate or mixtures thereof and others that are known in the art.

Melamine resins may be partially or fully etherified with one or more alcohols like methanol or butanol. A non-limiting example is hexamethoxymethyl melamine. Non-limiting examples of suitable melamine resins include monomeric melamine, polymeric melamine-formaldehyde resin, or a combination thereof. The monomeric melamines include low molecular weight melamines which contain, on an average, three or more methylol groups etherized with a C₁ to C₅ monohydric alcohol such as methanol, n-butanol, or isobutanol per triazine nucleus, and have an average degree of condensation up to about 2 and, in certain embodiments, of from about 1.1 to about 1.8, and have a proportion of mononuclear species not less than about 50 percent by weight. By contrast, polymeric melamines have an average degree of condensation of more than about 1.9. Some such suitable monomeric melamines include alkylated melamines, such as methylated, butylated, isobutylated melamines and mixtures thereof. Many of these suitable monomeric melamines are supplied commercially.

The polyester of the polyester-polyurethane polymer binder may be linear or branched. Useful polyesters can include esterification products of aliphatic or aromatic dicarboxylic acids, polyols, diols, aromatic or aliphatic cyclic anhydrides and cyclic alcohols. Non-limiting examples of suitable cycloaliphatic polycarboxylic acids are tetrahydrophthalic acid, hexahydrophthalic acid, 1,2-cyclohexanedicarboxylic acid, 1,3-cyclohexanedicarboxylic acid, 1,4-cyclohexanedicarboxylic acid, 4-methylhexahydrophthalic acid, endomethylenetetrahydrophthalic acid, tricyclodecanedicarboxylic acid, endoethylenehexahydrophthalic acid, camphoric acid, cyclohexanetetracarboxylic, and cyclobutanetetracarboxylic acid. The cycloaliphatic polycarboxylic acids can be used not only in their cis but also in their trans form and as a mixture of both forms. Further non-limiting examples of suitable polycarboxylic acids can include aromatic and aliphatic polycarboxylic acids, such as, for example, phthalic acid, isophthalic acid, terephthalic acid, halogenophthalic acids, such as tetrachloro- or tetrabromophthalic acid, adipic acid, glutaric acid, azelaic acid, sebacic acid, fumaric acid, maleic acid, trimellitic acid, and pyromellitic acid. Combinations of polyacids, such as a combination of polycarboxylic acids and cycloaliphatic polycarboxylic acids, can be suitable. Combinations of polyols can also be suitable.

Non-limiting suitable polyhydric alcohols include ethylene glycol, propanediols, butanediols, hexanediols, neopentylglycol, diethylene glycol, cyclohexanediol, cyclohexanedimethanol, trimethylpentanediol, ethylbutylpropanediol, ditrimethylolpropane, trimethylolethane, trimethylolpropane, glycerol, pentaerythritol, dipentaerythritol, polyethylene glycol and polypropylene glycol. If desired, monohydric alcohols, such as, for example, butanol, octanol, lauryl alcohol, ethoxylated or propoxylated phenols may also be included along with polyhydric alcohols to control molecular weight.

Non-limiting examples of suitable polyesters include branched copolyester polymers. Compounds with multifunctional groups such as AxBy (x,y=1 to 3, independently) types including those having one carboxyl group and two hydroxyl groups, two carboxyl groups and one hydroxyl group, one carboxyl group and three hydroxyl groups, or three carboxyl groups and one hydroxyl group can be used to create branched structures. Non-limiting examples of such compounds include 2,3 dihydroxy propionic acid, 2,3 dihydroxy 2-methyl propionic acid, 2,2 dihydroxy propionic acid, 2,2-bis(hydroxymethyl) propionic acid, and the like.

The branched copolyester polymer binder can be conventionally polymerized from a monomer mixture including a chain extender selected from the group of a hydroxy carboxylic acid, a lactone of a hydroxy carboxylic acid, and a combination thereof; and one or more branching monomers. Some of the suitable hydroxy carboxylic acids include glycolic acid, lactic acid, 3-hydroxypropionic acid, 3-hydroxybutyric acid, 3-hydroxyvaleric acid, and hydroxypyvalic acid. Some of the suitable lactones include caprolactone, valerolactone; and lactones of the corresponding hydroxy carboxylic acids, such as, e.g., 3-hydroxypropionic acid, 3-hydroxybutyric acid, 3-hydroxyvaleric acid, and hydroxypyvalic acid. In certain embodiments, caprolactone can is utilized. In various embodiments, the branched copolyester polymer can be produced by polymerizing, in one step, a monomer mixture including a chain extender and hyper branching monomers, or by first polymerizing the hyper branching monomers followed by polymerizing the chain extenders.

The polyester-polyurethane polymer can be produced from the polyester and polyisocyanates. The polyester can be polymeric or oligomeric organic species with at least two hydroxyl-functionalities or two-mercapto functionalities and their mixtures thereof. Polyesters and polycarbonates with terminal hydroxy groups can be effectively used as the diols.

The polyurethane polymers may be produced by reacting polyisocyanate(s) with polyol(s) in excess. In certain embodiments, low molar mass polyols defined by an empirical and structural formula, such as polyhydric alcohols, are utilized to form the polyurethane polymer. Non-limiting examples of polyhydric alcohols include ethylene glycol, propanediols, butanediols, hexanediols, neopentylglycol, diethylene glycol, cyclohexanediol, cyclohexanedimethanol, trimethylpentanediol, ethylbutylpropanediol, ditrimethylolpropane, trimethylolethane, trimethylolpropane, glycerol, pentaerythritol, dipentaerythritol, polyethylene glycol and polypropylene glycol. In other embodiments, oligomeric or polymeric polyols with number-average molar masses of, for example, up to 8000, alternatively up to 5000, alternative up to 2000, and/or, for example, corresponding hydroxyl-functional polyethers, polyesters or polycarbonates are utilized to form the polyurethane polymer. In various non-limiting embodiments, all whole and fractional values and ranges of whole and fractional values including and between each value set forth above, are hereby expressly contemplated for use herein.

Non-limiting examples of suitable polyisocyanates include aromatic, aliphatic or cycloaliphatic di-, tri- or tetra-isocyanates, including polyisocyanates having isocyanurate structural units, such as, the isocyanurate of hexamethylene diisocyanate and isocyanurate of isophorone diisocyanate; the adduct of two molecules of a diisocyanate, such as, hexamethylene diisocyanate and a diol such as, ethylene glycol; uretidiones of hexamethylene diisocyanate; uretidiones of isophorone diisocyanate or isophorone diisocyanate; the adduct of trimethylol propane and meta-tetramethylxylene diisocyanate. Other polyisocyanates disclosed herein can also be suitable for producing polyurethanes.

Aqueous polyurethane binders and their production are well known to the skilled person. Typical and useful non-limiting examples of aqueous polyurethane binders include aqueous polyurethane binder dispersions which can typically be made by first forming an NCO-functional hydrophilic polyurethane prepolymer by addition reaction of polyol type compounds and polyisocyanates, conversion of the so-formed polyurethane prepolymer into the aqueous phase and then reacting the aqueously dispersed NCO-functional polyurethane prepolymer with an NCO-reactive chain extender like, for example, a polyamine, a hydrazine derivative or water.

One non-limiting example of a polyester-polyurethane polymer is a polyurethane dispersion resin formed from a diol resin and a diisocyanate. Another non-limiting example of a polyester-polyurethane polymer is a polyurethane dispersion resin formed from a polycarbonate-polyester and an diisocyanate.

In some embodiments, the binder is a polymer or oligomer that has a crosslinkable-functional group, such as an isocyanate-reactive group. The term "crosslinkable-functional group" refers to functional groups that are positioned in the oligomer, in the polymer, in the backbone of the polymer, in the pendant from the backbone of the polymer, terminally positioned on the backbone of the polymer, or combinations thereof, wherein these functional groups are capable of crosslinking with crosslinking-functional groups (during the curing step) to produce a coating in the form of crosslinked structures. Typical crosslinkable-functional groups can include hydroxyl, thiol, isocyanate, thioisocyanate, acetoacetoxy, carboxyl, primary amine, secondary amine, epoxy, anhydride, ketimine, aldimine, or a workable combination thereof. Some other functional groups such as orthoester, orthocarbonate, or cyclic amide that can generate hydroxyl or amine groups once the ring structure is opened can also be suitable as crosslinkable-functional groups.

In various embodiments, the composition may include the binder, if at all, in an amount of from greater than zero up to about 50, of from about 0.1 to about 50, alternatively from about 1 to about 20, or alternatively from about 1 to about 10, wt.%, based on an active percent of binder basis. In other embodiments, the composition may include the binder in an amount of from about 5 to about 70 wt.%, alternatively from about 10 to about 50 wt.%, or alternatively from about 15 to about 25 wt. %, based on an active percent of binder basis. In various non-limiting embodiments, all whole and fractional values and ranges of whole and fractional values including and between each value set forth above, are hereby expressly contemplated for use herein.

### Pigment

The composition optionally includes the pigment which may be any known in the art. For example, the composition may include the pigment or may be free of the pigment. In one embodiment, the composition is free of the pigment and can be described as a clear coat composition.

The pigment may be or include a primary pigment. Non-limiting examples of suitable primary pigments include pigments with coloristic including: blue pigments including indanthrone blue Pigment Blue 60, phthalocyanine blues, Pigment Blue 15:1, 15:, 15:3 and 15:4, and cobalt blue Pigment Blue 28; red pigments including quinacridone reds, Pigment Red 122 and Pigment Red 202, iron oxide red Pigment Red 101, perylene reds scarlet Pigment Red 149, Pigment Red 177, Pigment Red 178, and maroon Pigment Red 179, azoic red Pigment Red 188, and diketo-pyrrolopyrrol reds Pigment red 255 and Pigment Red 264; yellow pigments including diarylide yellows Pigment Yellow 14, iron oxide yellow Pigment Yellow 42, nickel titanate yellow Pigment Yellow 53, indolinone yellows Pigment Yellow 110 and Pigment Yellow 139, monoazo yellow Pigment yellow 150, bismuth vanadium yellow pigment Yellow 184, disazo yellows Pigment Yellow 128 and Pigment Yellow 155; orange pigments including quinacridone orange pigments Pigment Yellow 49 and Pigment Orange 49, benzimidazolone orange pigment Pigment Orange 36; green pigments including phthalocyanine greens Pigment Green 7 and Pigment Green 36, and cobalt green Pigment Green 50; violet pigments including quinacridone violets Pigment Violet 19 and Pigment Violet 42, dioxane violet Pigment Violet 23, and perylene violet Pigment Violet 29; brown pigments including monoazo brown Pigment Brown 25 and chrome-antimony titanate Pigment Brown 24, iron chromium oxide Pigment Brown 29; white pigments such as anatase and rutile titanium dioxide (TiO2) Pigment White 6; and black pigments including carbon blacks Pigment Black 6 and Pigment Black 7, perylene black Pigment Black 32, copper chromate black Pigment Black 28.

The pigment may alternatively be or include an effect pigment selected from the group of metallic flake pigments, mica-containing pigments, glass-containing pigments, and combinations thereof.

In other embodiments, suitable pigments are, for example, Pigment Yellow 213, PY 151, PY 93, PY 83, Pigment Red 122, PR 168, PR 254, PR 179, Pigment Red 166, Pigment Red 48:2, Pigment Violet 19, Pigment Blue 15:1, Pigment Blue 15:3, Pigment Blue 15:4, Pigment Green 7, Pigment Green 36, Pigment Black 7 or Pigment White 6.

Further non-limiting examples of suitable pigments include metallic oxides, metal hydroxide, effect pigments including metal flakes, chromates, such as lead chromate, sulfides, sulfates, carbonates, carbon black, silica, talc, china clay, phthalocyanine blues and greens, organo reds, organo maroons, pearlescent pigments, other organic pigments and dyes, and combinations thereof. If desired, chromate-free pigments, such as barium metaborate, zinc phosphate, aluminum triphosphate and combinations thereof, can also be utilized.

Further non-limiting examples of suitable effect pigments include bright aluminum flake, extremely fine aluminum flake, medium particle size aluminum flake, and bright medium coarse aluminum flake; mica flake coated with titanium dioxide pigment also known as pearl pigments; and combinations thereof. Non-limiting examples of suitable colored pigments include titanium dioxide, zinc oxide, iron oxide, carbon black, mono azo red toner, red iron oxide, quinacridone maroon, transparent red oxide, dioxazine carbazole violet, iron blue, indanthrone blue, chrome titanate, titanium yellow, mono azo permanent orange, ferrite yellow, mono azo benzimidazolone yellow, transparent yellow oxide, isoindoline yellow, tetrachloroisoindoline yellow, anthanthrone orange, lead chromate yellow, phthalocyanine green, quinacridone red, perylene maroon, quinacridone violet, pre-darkened chrome yellow, thio-indigo red, transparent red oxide chip, molybdate orange, molybdate orange red, and combinations thereof. Titanium dioxide is commercially available in various grades with various coatings as is well known in the art. Any of such may be used herein.

Extender pigments may also be utilized. The extender pigment may have a variety of configurations including, but not limited to, nodular, platelet, acicular, and fibrous. Non-limiting examples of suitable extender pigments include whiting, barytes, amorphous silica, fumed silica, diatomaceous silica, china clay, calcium carbonate, phyllosilicate (mica), wollastonite, magnesium silicate (talc), barium sulfate, kaolin, and aluminum silicate.

The composition may include the pigment, if at all, in an amount of greater than zero, for example, from about 0.1 to about 50, alternatively from about 1 to about 20, or alternatively from about 1 to about 10, wt.%, based on a total weight of the composition. In various non-limiting embodiments, all whole and fractional values and ranges of whole and fractional values including and between each value set forth above, are hereby expressly contemplated for use herein.

### Additive

The composition also includes the additive that includes the first polymer and/or the second polymer. The additive may be, include, consist essentially of, or consist of, the first polymer and/or the second polymer. In one embodiment, the additive includes the first polymer and the composition is free of the second polymer. In another embodiment, the additive includes the second polymer and the composition is free of the first polymer. In another embodiment, the additive includes the first polymer and the second polymer.

The first polymer and the second polymer are not particularly limited in amounts. In various embodiments, the first polymer is present in an amount of from about 0 to about 100, about 0.1 to about 99.9, about 1 to about 99, about 5 to about 95, about 10 to about 90, about 15 to about 85, about 20 to about 80, about 25 to about 75, about 30 to about 70, about 35 to about 65, about 40 to about 60, about 45 to about 55, or about 50, weight percent based on a total weight of the additive. In other embodiments, the second polymer is present in an amount of from about 0 to about 100, about 0.1 to about 99.9, about 1 to about 99, about 5 to about 95, about 10 to about 90, about 15 to about 85, about 20 to about 80, about 25 to about 75, about 30 to about 70, about 35 to about 65, about 40 to about 60, about 45 to about 55, or about 50, weight percent based on a total weight of the additive. In various non-limiting embodiments, all whole and fractional values and ranges of whole and fractional values including and between each value set forth above, are hereby expressly contemplated for use herein.

In further embodiments, the first polymer is present in an amount of from about 0 to about 20, 0.1 to about 20, about 0.5 to about 19.5, about 1 to about 19, about 1.5 to about 18.5, about 2 to about 18, about 2.5 to about 17.5. about 3 to about 17, about 3.5 to about 16.5, about 4 to about 16, about 4.5 to about 15.5, about 5 to about 15, about 5.5 to about 14.5, about 6 to about 14, about 6.5 to about 13.5, about 7 to about 13, about 7.5 to about 12.5, about 8 to about 12, about 8.5 to about 11.5, about 9 to about 11, about 9.5 to about 10.5, or about 10, weight percent based on a total weight of the composition. In still further embodiments, the second polymer is present in an amount of from about 0 to about 20, 0.1 to about 20, about 0.5 to about 19.5, about 1 to about 19, about 1.5 to about 18.5, about 2 to about 18, about 2.5 to about 17.5. about 3 to about 17, about 3.5 to about 16.5, about 4 to about 16, about 4.5 to about 15.5, about 5 to about 15, about 5.5 to about 14.5, about 6 to about 14, about 6.5 to about 13.5, about 7 to about 13, about 7.5 to about 12.5, about 8 to about 12, about 8.5 to about 11.5, about 9 to about 11, about 9.5 to about 10.5, or about 10, weight percent based on a total weight of the composition. In one embodiment, the first polymer is present in an amount of from about 0.25 to about 5 weight percent actives based on a total weight of the paint composition and the second polymer is present in an amount of from about 0.25 to about 5.0 weight percent actives based on a total weight of the paint composition. In various non-limiting embodiments, all whole and fractional values and ranges of whole and fractional values including and between each value set forth above, are hereby expressly contemplated for use herein.

### First Polymer

The first polymer may be, include, consist essentially of, or consist of, the reaction product of:
(1) at least one ethylenically unsaturated monomer and
(2) a second reactant chosen from monosaccharides, disaccharides, oligosaccharides, polysaccharides and combinations thereof.

The at least one ethylenically unsaturated monomer may be a single monomer or two or more monomers. The at least one ethylenically unsaturated monomer is not particularly limited and may be any known in the art. The terminology "consist essentially of" describes that the first polymer may be free of other reaction products not described herein, free of other polymers, monomers, initiators, etc.

In various embodiments, the (1) at least one ethylenically unsaturated monomer is chosen from anionic ethylenically unsaturated monomers, non-ionic ethylenically unsaturated monomers, hydrophobic ethylenically unsaturated monomers, and combinations thereof. In other embodiments, the (1) at least one ethylenically unsaturated monomer is chosen from acrylates, vinyl monomers, aromatic monomers, acrylonitriles, maleic anhydrides, maleic acid and esters thereof, itaconic acid and esters thereof, acrylamides, olefins, dienes, and combinations thereof.

### Anionic Ethylenically Unsaturated Monomers

As used herein, the term "anionic ethylenically unsaturated monomer" means an ethylenically unsaturated monomer which is capable of developing a negative charge when the polymer that it is used to form is in an aqueous solution.

In various embodiments, the anionic ethylenically unsaturated monomer is an acid. The anionic ethylenically unsaturated monomers can include, but are not limited to, acrylic acid, methacrylic acid, 2-ethylacrylic acid, α-chloro-acrylic acid, α-cyano acrylic acid, β-methyl-acrylic acid (crotonic acid), α-phenyl acrylic acid, β-acryloxy propionic acid, sorbic acid, α-chloro sorbic acid, angelic acid, 2-carboxyethyl (meth)acrylate, cinnamic acid, p-chloro cinnamic acid, β-styryl acrylic acid (1-carboxy-4-phenyl butadiene-1,3), itaconic acid, maleic acid, citraconic acid, mesaconic acid, glutaconic acid, aconitic acid, fumaric acid, tricarboxy ethylene, muconic acid, 2-acryloxypropionic acid, 2-acrylamido-2-methyl propane sulfonic acid, vinyl sulfonic acid, sodium methallyl sulfonate, sulfonated styrene, allyloxybenzene sulfonic acid, and vinyl phosphonic acid. Combinations of anionic ethylenically unsaturated monomers can also be used. In one embodiment, the anionic ethylenically unsaturated monomer may be methacrylic acid, maleic acid, acrylic acid, itaconic acid, 2-acrylamido-2-methyl propane sulfonic acid or mixtures thereof. In one embodiment, most typically the anionic ethylenically unsaturated monomer is methacrylic acid or acrylic acid, or combinations thereof. As used herein, the term "(meth)acrylic" acid is meant to include both acrylic acid and methacrylic acid. Similarly, the term "alkyl (meth)acrylate" as used herein is meant to include alkyl acrylate and alkyl methacrylate.

### Nonionic Ethylenically Unsaturated Monomers

As used herein, the term "nonionic ethylenically unsaturated monomer" means an ethylenically unsaturated monomer which does not introduce a charge into the polymer that it is used to form. One or more may be used as described above or may be omitted.

In various embodiments, nonionic ethylenically unsaturated monomers include, but are not limited to, acrylamide, methacrylamide, N-C₁-C₃alkyl(meth)acrylamides and N,N-C₁-C₃ dialkyl(meth)acrylamides such as N-methylmethacrylamide, N-ethylacrylamide, N-propylacrylamide, N-isopropylacrylamide, N,N-dimethylacrylamide, and N,N - dimethylmethacrylamide; vinyl morpholine, vinyl pyrrolidone, vinyl propionate, vinyl butanoate, ethoxylated alkyl, alkaryl or aryl monomers such as methoxypolyethylene glycol (meth)acrylate, allyl glycidyl ether, allyl alcohol, glycerol (meth)acrylate, C₁ to C₄ hydroxyalkyl esters of (meth)acrylic acid, and others. Nonionic ethylenically unsaturated monomers include (poly) C₁-C₄alkoxylated (meth)acrylates such as poly(ethylene glycol)ₙ (meth)acrylate and poly(propylene glycol)ₙ (meth)acrylate where n = 1 to 100, typically 3 to 50, and most typically 5 to 20, ethoxylated C₁-C₄ alkyl, C₁-C₄ alkaryl or aryl monomers. In one embodiment, this monomer is methoxypolyethylene glycol (meth)acrylate. The optional C₁ to C₄ hydroxyalkyl esters of (meth)acrylic acid can include hydroxyethyl (meth)acrylate, hydroxypropyl (meth)acrylate, hydroxybutyl (meth)acrylate, and (butane diol mono(meth)acrylate). In one embodiment, the monomer is chosen from 2-hydroxyethyl (meth)acrylate, 2-hydroxypropyl (meth)acrylate and 2-hydroxybutyl (meth)acrylate. In various non-limiting embodiments, all values and ranges of values, both whole and fractional, between and including all of the above, are hereby expressly contemplated for use herein.

### Short and Long Chain Hydrophobic Ethylenically Unsaturated Monomers

As used herein, the term "short chain hydrophobic ethylenically unsaturated monomer" means a monomer that has a side chain including a hydrophobe that has 7 or fewer carbon atoms. e.g., 7, 6, 5, 4, 3, 2, or 1 carbon atom.

In various embodiments, the hydrophobic ethylenically unsaturated monomer can be sparingly soluble in water and have a water solubility of less than about 6, 5, 4, 3, 2, 1.6, 1, etc. grams per about 100 mls of water at about 25°C. These hydrophobic ethylenically unsaturated monomers may include linear or branched alk(en)yl, cycloalkyl, aryl, or alk(en)aryl moieties.

Suitable hydrophobic ethylenically unsaturated monomers include C₁-C₇ alkyl esters of acrylic acid, maleic acid, itaconic acid and methacrylic acid; C₁-C₇ alkyl amides of acrylic acid, maleic acid, itaconic acid and methacrylic acid; benzyl (meth)acrylate, phenyl (meth)acrylate, benzyl ethoxylate (meth)acrylate, phenyl ethoxylate (meth)acrylate, 6-hydroxyhexyl (meth)acrylate, and styrene, alpha-methyl styrene, vinyl toluene, and p-chlorostyrene; vinyl acetate, vinyl butyrate, vinyl caprolate, vinyl valerate, vinyl hexanoate, vinyl caprolactam, (meth)acrylonitrile, isobutylene, diisobutylene, isoprene, vinyl chloride, vinylidene chloride, and combinations thereof.

As used herein, the term "long chain hydrophobic ethylenically unsaturated monomer" means a monomer that has a side chain including a hydrophobe that has 8 or greater carbon atoms. Although there is no particular upper limit for carbon atoms, in various embodiments, the upper limit is about 50, 45, 40, 35, 30, 25, 20, 15, or 10. In other embodiments, the number of carbon atoms is from about 8 to about 32, 10 to about 30, 12 to about 28, 14 to about 26, 16 to about 24, 18 to about 22, or 20 to about 22. In various embodiments, such a monomer is independently chosen from C₈-C₃₂ alkyl esters of acrylic acid, maleic acid, itaconic acid and methacrylic acid; C₈-C₃₂ alkyl amides of acrylic acid, maleic acid, itaconic acid and methacrylic acid; 10-hydroxydecyl (meth)acrylate, t-butyl styrene, iso-propyl styrene, vinyl octanoate, vinyl nonanoate, vinyl decanoate, vinyl neodecanoate, vinyl laurate, vinyl caprolactam, (meth)acrylonitrile, isobutylene, diisobutylene, isoprene, vinyl chloride, vinylidene chloride, 1 -allyl naphthalene, 2-allyl naphthalene, 1 -vinyl naphthalene, 2-vinyl naphthalene, and combinations thereof. In various non-limiting embodiments, all values and ranges of values, both whole and fractional, between and including all of the above, are hereby expressly contemplated for use herein.

In other embodiments, the at least one ethylenically unsaturated monomer may be chosen from C1-C32 alkyl esters of acrylic and methacrylic acid including methyl (meth)acrylate, ethyl (meth)acrylate, n-propyl (meth)acrylate, iso-propyl (meth)acrylate, n-butyl (meth)acrylate, t-butyl (meth)acrylate, iso-butyl (meth)acrylate, n-amyl (meth)acrylate, iso-amyl (meth)acrylate, hexyl (meth)acrylate,octyl (meth)acrylate, decyl (meth)acrylate, benzyl (meth)acrylate, phenyl (meth)acrylate, benzyl ethoxylate (meth)acrylate, phenyl ethoxylate (meth)acrylate, 6-hydroxyhexyl (meth)acrylate, 10-hydroxydecyl (meth)acrylate, 2-ethylhexyl (meth)acrylate, 2-butyloctyl (meth)acrylate, 2-hexyldecyl (meth)acrylate, 2-octyldodecyl (meth)acrylate, 2-decyltetradecyl (meth)acrylate, 2-dodecylhexadecyl (meth)acrylate, behenyl (meth)acrylate, lauryl (meth)acrylate, stearyl (meth)acrylate; and C4-C32 alkyl amides of acrylic and methacrylic acid, including tertiary butyl (meth)acrylamide, t-octyl (meth)acrylamide, 2-ethylhexyl (meth)acrylamide, n-octyl (meth)acrylamide, lauryl (meth)acrylamide, stearyl (meth)acrylamide, and behenyl (meth)acrylamide, styrene, α-methyl styrene, vinyl toluene, t-butyl styrene, iso-propyl styrene, and p-chlorostyrene; vinyl acetate, vinyl butyrate, vinyl caprolate, vinyl valerate, vinyl hexanoate, vinyl octanoate, vinyl nonanoate, vinyl decanoate, vinyl neodecanoate, vinyl laurate, vinyl caprolactam, (meth)acrylonitrile, butadiene, isobutylene, isoprene, vinyl chloride, vinylidene chloride, 1-allyl naphthalene, 2-allyl naphthalene, 1-vinyl naphthalene, 2-vinyl naphthalene, ethyl (meth)acrylate, methyl (meth)acrylate, 2-ethylhexyl acrylate, n-butyl (meth)acrylate, iso-butyl (meth)acrylate, t-butyl (meth)acrylate, vinyl acetate, tertiary butyl acrylamide and combinations thereof. In various embodiments, ethyl acrylate, methyl acrylate, methyl methacrylate, vinyl acetate, butyl acrylate and combinations thereof are typical. In other embodiments, exemplary alkyl (meth)acrylate monomers can be chosen from methyl (meth)acrylate, ethyl (meth)acrylate, n-propyl (meth)acrylate, iso-propyl (meth)acrylate, n-butyl (meth)acrylate, isobutyl (meth)acrylate, t-butyl (meth)acrylate, n-amyl (meth)acrylate, iso-amyl (meth)acrylate, and combinations thereof.

In various embodiments, the at least one ethylenically unsaturated monomer is chosen from (meth)acrylic acid, maleic acid, itaconic acid, 2-acrylamido-methylpropane sulfonic acid, hydroxy alkyl (meth)acrylate, (meth)acrylate, alkyl polyalkoxy (meth)acrylate, salts thereof, and combinations thereof.

It is contemplated that salts of any of the aforementioned compounds may also be used herein, as chosen by one of skill in the art.

### Second Reactant

The second reactant is chosen from monosaccharides, disaccharides, oligosaccharides, polysaccharides and combinations thereof. In one embodiment, the second reactant is a monosaccharide. In another embodiment, the second reactant is a disaccharide. In another embodiment, the second reactant is an oligosaccharide. In a further embodiment, the second reactant is a polysaccharide. Moreover, the second reactant, and the composition as a whole, may be free of (or not include the reaction product of) one or more of the above, so long as at least one is used in the reaction product if the first polymer is utilized.

Suitable monosaccharides for use herein include, but are not limited to, glucose, fructose, galactose, mannose, ribose, deoxyribose, xylose, arabinose, erythrose, lyxose, allose, altrose, gulose, idose, talose, psicose, sorbose, tagatose, threose, sedoheptulose, and combinations thereof.

Suitable disaccharides for use herein include, but are not limited to, sucrose, lactose, maltose, cellobiose, trehalose, isomaltose, melibiose, gentiobiose, kojibiose, sophorose, laminaribiose, maltulose, lactulose, turanose, leucrose, palatinose, neotrehalose, and combinations thereof.

Suitable oligosaccharides for use herein include, but are not limited to, dextrin, maltodextrin, amylopectin, corn syrup, raffinose, stachyose, verbascose, maltotriose, fructo-oligosaccharides (FOS), galacto-oligosaccharides (GOS), maltopentaose, isomaltooligosaccharides, cyclodextrins, xylo-oligosaccharides, mannan-oligosaccharides, inulin-type oligosaccharides, soy oligosaccharides, and combinations thereof.

Suitable polysaccharides for use herein include, but are not limited to, starch, glycogen, cellulose, chitin, dextran, agarose, pectin, hemicellulose, inulin, lignin, xanthan, amylose, amylopectin, murein (peptidoglycan), alginate, hyaluronic acid, chondroitin sulfate, heparin, keratan sulfate, glucomannan, beta-glucan, arabinogalactan, and combinations thereof.

In still other embodiments, the second reactant is chosen from dextrin, maltodextrin, amylopectin, glycogen, corn syrup, inulin, cyclodextrins, beta-glucan, pectin, xanthan, and combinations thereof.

In one embodiment, the (2) second reactant is a polysaccharide. In another embodiment, the (2) second reactant is an oligosaccharide, maltodextrin, corn syrup, or a combination thereof. In another embodiment, the first polymer is the reaction product of maltodextrin, and one or more of maleic acid, or acrylic acid, or itaconic acid, or 2-acrylamido-2-methyl propane sulfonic acid, or salts thereof, or combinations thereof.

In a further embodiment, the reaction product is further defined as the reaction product of about 10 to 90 weight percent of the maltodextrin, about 5 to about 75 weight percent of the maleic acid, and about 10 to about 90 weight percent of the acrylic acid and salts thereof. In various embodiments, the amount of the maltodextrin, or similar compound described above, may be from about 10 to about 90, about 15 to about 85, about 20 to about 80, about 25 to about 75, about 30 to about 70, about 35 to about 65, about 40 to about 60, about 45 to about 55, or about 50, weight or mole percent, based on a total weight or number of moles of the reaction product. In other embodiments, the amount of maleic acid, or similar compound described above may be from about 5 to about 75, about 10 to about 70, about 15 to about 65, about 20 to about 60, about 25 to about 55, about 30 to about 50, about 35 to about 45, or about 40, weight or mole percent, based on a total weight or number of moles of the reaction product. In various embodiments, the amount of the acrylic acid, or similar compound described above, may be from about 10 to about 90, about 15 to about 85, about 20 to about 80, about 25 to about 75, about 30 to about 70, about 35 to about 65, about 40 to about 60, about 45 to about 55, or about 50, weight or mole percent, based on a total weight or number of moles of the reaction product. In various non-limiting embodiments, all values and ranges of values, both whole and fractional, between and including all of the above, are hereby expressly contemplated for use herein.

In still other embodiments, the at least one ethylenically unsaturated monomer and the second reactant may be reacted in a molar ratio of from about (0.1 to 99.9) : about (0.1 to 99). In various embodiments, the molar ratio is about 0.1, 0.2, 0.3, 0.4, 0.5, 0.6, 0.7, 0.8, 0.9, or 1 : 1, or vice versa. In various non-limiting embodiments, all values and ranges of values, both whole and fractional, between and including all of the above, are hereby expressly contemplated for use herein.

### Second Polymer

Referring back, the second polymer has the structure (I):

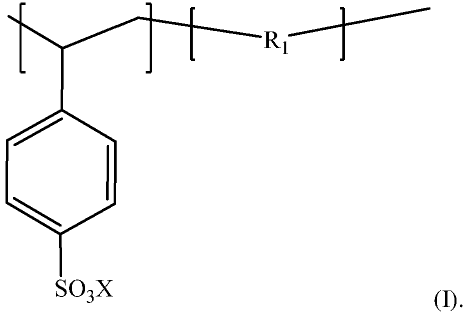

In this structure, R₁ is a residue from an ethylenically unsaturated monomer. The ethylenically unsaturated monomer upon which this residue is based may be the same as the ethylenically unsaturated monomer of (1) used to form the first polymer or it may be different. The ethylenically unsaturated monomer upon which this residue is based may be any described herein or may be different and chosen by one of skill in the art. In various embodiments, R₁ is a residue of (meth)acrylic acid, maleic acid, maleic anhydride, itaconic acid, itaconic anhydride, 2-acrylamido-methylpropane sulfonic acid, vinyl sulfonic acid, sodium methallyl sulfonate, allyloxybenzene sulfonic acid, vinyl phosphonic acid, hydroxy alkyl (meth)acrylate, (meth)acrylate, alkyl polyalkoxy (meth)acrylate, polyalkoxy allyl, vinyl sulfonic acid, sodium methallyl sulfonate, sulfonated styrene, allyloxybenzene sulfonic acid, vinyl phosphonic acid , linear or branched C₁-C₃₂ alkyl esters of acrylic acid, maleic acid, itaconic acid and methacrylic acid; linear or branched C₁-C₃₂ alkyl amides of acrylic acid, maleic acid, itaconic acid and methacrylic acid benzyl (meth)acrylate. phenyl (meth)acrylate, benzyl ethoxylate (meth)acrylate, phenyl ethoxylate (meth)acrylate, 6-hydroxyhexyl (meth)acrylate, and styrene, alpha-methyl styrene, vinyl toluene, and p-chlorostyrene; vinyl acetate, vinyl butyrate, vinyl caprolate, vinyl valerate, vinyl hexanoate, vinyl caprolactam, vinyl pyridine, (meth)acrylonitrile, isobutylene, diisobutylene, polydimethylsiloxane polyalkoxy (meth)acrylate, silicone monomers, or a salt thereof or mixtures thereof. Moreover, R₁ can be present or can be absent.

Moreover, X is H, a cation, or an amine. In one embodiment, X is H. In another embodiment, X is a cation. The cation is not particularly limited and may be, for example, Na, K, Mg, Ca, Iron (Fe²⁺ and Fe³⁺), Copper (Cu⁺ and Cu²⁺), Zinc (Zn²⁺), Nickel (Ni²⁺), Silver (Ag⁺), Aluminum (Al³⁺), Lead (Pb²⁺), Tin (Sn²⁺), etc. Alternatively, X can be an amine such as Ammonium (NH₃⁺) or can be derived from aminomethyl propanol, monoethanol amine, diethanol amine, or triethanol amine, etc.

In various embodiments, the amine is chosen from a methylammonium ion (CH₃NH₃⁺), an ethylammonium ion (C₂H₅NH₃⁺), a dimethylammonium ion ((CH₃)₂NH₂⁺), a diethylammonium ion ((C₂H₅)₂NH₂⁺), a trimethylammonium ion ((CH₃)₃NH⁺), a triethylammonium ion ((C₂H₅)₃NH⁺), an anilinium ion (C₆H₅NH₃⁺), a tetramethylammonium ion ((CH₃)₄N⁺), a tetraethylammonium ion ((C₂H₅)₄N⁺), or combinations thereof.

The second polymer is not particularly limited relative to molecular weight. In various embodiment, the second polymer has a weight average molecular weight (Mw) of from about 1,000 to about 2,000,000 Da. In other embodiments, the Mw is from about 5,000 to 100,000, about 10,000 to about 95,000, about 15,000 to about 90,000, about 20,000 to about 85,000, about 25,000 to about 75,000, about 30,000 to about 70,000, about 35,000 to about 65,000, about 40,000 to about 60,000, about 45,000 to about 55,000, or about 50,000, Da. In other embodiments, the Mw is from about 100,000 to about 950,000, about 150,000 to about 900,000, about 200,000 to about 850,000, about 250,000 to about 750,000, about 300,000 to about 700,000, about 350,000 to about 650,000, about 400,000 to about 600,000, about 450,000 to about 550,000, or about 500,000, Da. In various non-limiting embodiments, all values and ranges of values, both whole and fractional, between and including all of the above, are hereby expressly contemplated for use herein.

### Additional Embodiments

The pH of the composition can be adjusted with any combination of acidic and/or basic pH adjusting agents known to the art. In various embodiments, an alkaline material is incorporated into the composition and can be referred to as a neutralizing agent or pH adjusting agent. Many types of neutralizing agents can be used, including inorganic and organic bases, and combinations thereof. Examples of inorganic bases include but are not limited to the alkali metal hydroxides (especially sodium, potassium, and ammonium), and alkali metal salts of inorganic acids, such as sodium borate (borax), sodium phosphate, sodium pyrophosphate, and the like; and mixtures thereof. Examples of organic bases include but are not limited to triethanolamine (TEA), diisopropanolamine, triisopropanolamine, aminomethyl propanol, dodecylamine, cocamine, oleamine, morpholine, triamylamine, triethylamine, tetrakis(hydroxypropyl)ethylenediamine, L-arginine, aminomethyl propanol, 2-amino 2-hydroxymethyl-1,3-propanediol, and PEG-15 cocamine. Alternatively, other alkaline materials can be used alone or in combination with the above mentioned inorganic and organic bases. Such materials include surfactants, surfactant mixtures, pre-neutralized surfactants. Any material capable of increasing the pH of the composition is suitable.

Various acidic materials can be utilized as a pH adjusting agent. Such acidic materials include organic acids and inorganic acids, for example, acetic acid, citric acid, tartaric acid, alpha-hydroxy acids, beta-hydroxy acids, salicylic acid, lactic acid, glycolic acid, and natural fruit acids, or inorganic acids, for example, hydrochloric acid, nitric acid, sulfuric acid, sulfamic acid, phosphoric acid, and combinations thereof. The addition of the acidic pH adjusting agent can be incorporated after the addition of the basic pH adjusting agent in the composition. As with the alkaline pH adjusting agents, other acidic materials can be used alone or in combination with the above mentioned inorganic and organic acids.

Buffering agents can also be used. Suitable buffering agents include, but are not limited to, alkali or alkali earth metal carbonates, phosphates, bicarbonates, citrates, borates, acetates, acid anhydrides, succinates, and the like, such as sodium phosphate, sodium citrate, sodium acetate, sodium bicarbonate, and sodium carbonate. Phosphates such as sodium or potassium tripolyphosphate may be particularly useful. The pH adjusting agent and/or buffering agent can be utilized in any amount necessary to obtain and/or maintain a desired pH value in the composition.

In addition to the components above, the composition may include, or be free of, other ingredients, for example, fluidizing agents, anti-sedimentation agents, plasticizers, surfactants, anti-foam agents, rheology modifiers, levelling agents, gloss modifiers, preservatives, pH adjustors such as organic amines, biocides, and the like, and combinations thereof. Conventional ingredients may include, but are not limited to, dispersants, antioxidants, UV stabilizers and absorbers, surfactants, wetting agents, leveling agents, antifoaming agents, anti-cratering agents, or combinations thereof. In various embodiments, one or more organic liquids which may be used as film-forming resins can be used. Examples of such resins include polyamides and cellulose ethers, such as ethyl cellulose and ethyl hydroxyethyl cellulose, nitrocellulose and cellulose acetate butyrate resins, including mixtures thereof. Examples of paint resins include short oil alkyd/melamine-formaldehyde, polyester/melamine-formaldehyde, thermosetting acrylic/melamine-formaldehyde, long oil alkyd, polyether polyols and multi-media resins such as acrylic and urea/aldehyde.

Extenders tend to be insoluble in the binder and water. They can be added to modify the flow and mechanical properties of the composition as well as the permeability, gloss and leveling characteristics of the paint film. White extender pigments can be added to paints to lower their cost or improve their properties. This class includes calcium carbonate, calcium sulfate, diatomaceous silica, and china clays.

Additional optional components include rheology modifiers and opaque polymers. The rheology modifiers include cellulosic derivatives, hydrophobically modified alkali swellable polymers, inorganic material such as clays, Nonionic Synthetic Associative Thickeners (NSAT's), and Nonionic Polyurethane Associative Thickeners (HEUR's) and similar materials.

The composition may optionally include other known ingredients such as dispersing agents, anti-foaming agents, biocides, pH control agents, wetting agents, materials to improve freeze thaw stability, leveling aids, coalescing agents and/or polymeric or oligomeric binders.

The composition may further include, or be free of, a non-ionic synthetic associative thickener (NSAT). Non-ionic synthetic associative thickeners can be used to provide viscosity and rheological control. These thickeners are typically non-ionic, meaning they do not carry any net charge in solution. These thickeners typically work by forming associations or interactions with other molecules, such as water or polymer chains, to increase viscosity.

Hydrophobically Modified Ethoxylated Urethanes (HEUR) thickeners typically include a polyethylene oxide (PEO) backbone with hydrophobic groups (such as alkyl chains) attached via urethane linkages. These hydrophobic groups interact with each other and with the hydrophobic domains of other molecules, leading to thickening. In various embodiments, the composition includes less than about 2, 1.5, 1, 0.5, or 0.1, weight % actives of a hydrophobically modified ethoxylated polyurethane (HEUR) based on a total weight of the composition. Alternatively, the composition may be free of such a polyurethane.

Hydrophobically Modified Cellulosics (HMHECs) thickeners are cellulose derivatives modified with hydrophobic groups, such as alkyl or alkylaryl moieties, attached to the cellulose backbone. These hydrophobic groups facilitate the association of cellulose chains, leading to increased viscosity.

Hydrophobically Modified Polyacrylic Acid (HMPAA) thickeners are based on polyacrylic acid (PAA) or its derivatives modified with hydrophobic groups. These hydrophobic modifications allow the polymer chains to associate with each other and with other molecules in the system, resulting in thickening.

Hydrophobically Modified Polyurethanes (HMPU) thickeners are polyurethane-based polymers modified with hydrophobic groups. Similar to other associative thickeners, the hydrophobic groups facilitate the association of polymer chains, leading to viscosity enhancement.

### EXAMPLES

### Example 1:

The base paint composition below is formulated.

| **Ingredients** | **Function** | **weights (lbs)** |
|---|---|---|
| Grind | | |
| Water | Solvent | 212.16 |
| AMA 415 | In-can biocide | 2.32 |
| Ethvlan 1008 SA | wetting | 2.32 |
| BYK 022 | defoamer | 1.16 |
| Alcosperse 602N | Dispersant | 6.61 |
| Bermocoll Prime 2500 | Thickener | 5.80 |
| AMP-95 | Amine | 2.32 |
| TiO2 R902+ | Hiding | 202.88 |
| Minex 4 | Pigment | 133.32 |
| Omvacarb 5 | Extender | 133.32 |
| | | 702.20 |

| Let Down | | |
|---|---|---|
| Encor 657, 58% | Binder | 345.48 |
| Texanol | Coalescent | 5.80 |
| Acrysol RM5000 | ICI builder | 3.48 |
| BYK-349 | Defoamer | 2.32 |
| water | Solvent | 115.93 |
| | | 473.00 |
| | Totals | 1175.2 |

Subsequently, the second polymer is added and the compositions are then evaluated to determine dirt resistance pick up (DPUR):

| **Composition** | **First Polymer** | **Second Polymer** | **Wt% polymer** | **DPUR** |
|---|---|---|---|---|
| **Comparative Composition** | None | None | 0 | 4 |
| **Composition 1** | None | poly styrene sulfonate sodium salt, Mw = 1,000,000 Da | 0.3 | 5 |
| **Composition 2** | None | poly styrene sulfonate sodium salt, Mw = 200,000 Da | 0.3 | 5 |

DPUR Performance was visually graded on a scale of 1 to 5 with 1 being the worst and 5 being the best. These data indicate that the second polymer of this disclosure led to improved dirt pick up resistance in the paint compositions.

### Example 2

The aforementioned base composition was also used to form additional compositions which were evaluated to determine block resistance, as shown below:

| **Composition** | **First Polymer** | **Second Polymer** | **Wt% polymer** | **Block Resistance** |
|---|---|---|---|---|
| **Comparative Composition** | None | None | 0 | 4 |
| **Composition 3** | None | poly styrene sulfonate sodium salt, Mw = 200,000 Da | 0.3 | 10 |
| **Composition 4** | copolymer of maltodextrin (65 weight%) with acrylic acid (35 weight%) and maleic acid sodium salt (10 weight%). | None | 0.3 | 6 |

Early block Performance was graded on a scale of 1 to 10 with 1 being the worst and 10 being the best. These data indicate that the polymers of this invention gave improved early block resistance in this formulation.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration in any way. Rather, the foregoing detailed description will provide those skilled in the art with a convenient road map for implementing an exemplary embodiment. It being understood that various changes may be made in the function and arrangement of elements described in an exemplary embodiment without departing from the scope as set forth in the appended claims.

## Claims

1. A paint composition comprising:
A. water and/or an organic solvent;
B. at least one of a binder or a pigment; and
C. an additive comprising a first polymer and/or a second polymer,
wherein the first polymer comprises the reaction product of:
(1) at least one ethylenically unsaturated monomer and
(2) a second reactant chosen from monosaccharides, disaccharides, oligosaccharides, polysaccharides and combinations thereof; and
wherein the second polymer has the structure (I): 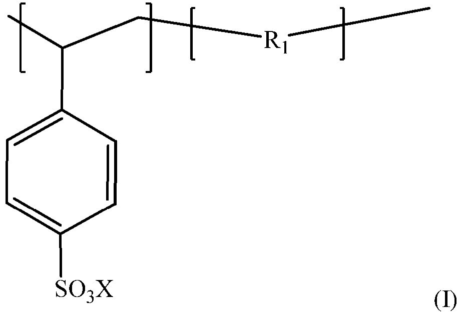
wherein R₁ is a residue from an ethylenically unsaturated monomer, R₁ can be present or absent, and X is H, a cation, or an amine;
wherein the sum of the weight percent actives of the first polymer and/or the second polymer is from about 0.1 to about 20 weight percent actives based on a total weight of the paint composition.

2. A paint composition as claimed in claim 1, wherein the additive comprises the first polymer and the composition is free of the second polymer.

3. A paint composition as claimed in claim 1, wherein the additive comprises the second polymer and the composition is free of the first polymer.

4. A paint composition as claimed in claim 1, wherein the additive comprises the first polymer and the second polymer.

5. A paint composition as claimed in any of claims 1, 2, or 4, wherein the at least one ethylenically unsaturated monomer is chosen from:
acrylates, vinyl monomers, aromatic monomers, acrylonitriles, maleic anhydrides, maleic acid and esters thereof, itaconic acid and esters thereof, acrylamides, olefins, dienes, and combinations thereof;
anionic ethylenically unsaturated monomers, non-ionic ethylenically unsaturated monomers, hydrophobic ethylenically unsaturated monomers, and combinations thereof; or
(meth)acrylic acid, maleic acid, itaconic acid, 2-acrylamido-methylpropane sulfonic acid, hydroxy alkyl (meth)acrylate, (meth)acrylate, alkyl polyalkoxy (meth)acrylate, salts thereof, and combinations thereof.

6. A paint composition as claimed in any of claims 1, 2, 4, or 5, wherein the second reactant is a polysaccharide or the second reactant is an oligosaccharide, maltodextrin, corn syrup, or a combination thereof.

7. A paint composition as claimed in any of claims 1, 2, or 4-6, wherein the first polymer is the reaction product of maltodextrin, maleic acid or salts thereof, and acrylic acid or salts thereof.

8. A paint composition as claimed in claim 7, wherein the reaction product is further defined as the reaction product of about 10 to 90 weight percent of the maltodextrin, about 5 to about 75 weight percent of the maleic acid, and about 10 to about 90 weight percent of the acrylic acid and salts thereof.

9. A paint composition as claimed in any of claims 1 or 3-8, wherein R₁ is a residue of (meth)acrylic acid, maleic acid, itaconic acid, 2-acrylamido-methylpropane sulfonic acid, hydroxy alkyl (meth)acrylate, (meth)acrylate, alkyl polyalkoxy (meth)acrylate, or a salt thereof, and X is H or Na or an amine and/or, wherein the second polymer has a weight average molecular weight (Mw) of from about 1,000 to about 2,000,000 Da.

10. A paint composition as claimed in any of claims 1, 2, or 4-9, wherein the first polymer is present in an amount of from about 0.1 to about 20 weight percent actives based on a total weight of the paint composition.

11. A paint composition as claimed in any one of claims 1 or 3-10, wherein the second polymer is present in an amount of from about 0.1 to about 20 weight percent actives based on a total weight of the paint composition.

12. A paint composition as claimed in any one of claims 1 or 4-11, wherein the first polymer is present in an amount of from about 0.25 to about 5 weight percent actives based on a total weight of the paint composition and the second polymer is present in an amount of from about 0.25 to about 5.0 weight percent actives based on a total weight of the paint composition.

13. A paint composition as claimed in claim 1, wherein R₁ is a residue of (meth)acrylic acid, maleic acid, maleic anhydride, itaconic acid, itaconic anhydride, 2-acrylamido-methylpropane sulfonic acid, vinyl sulfonic acid, sodium methallyl sulfonate, allyloxybenzene sulfonic acid, vinyl phosphonic acid, hydroxy alkyl (meth)acrylate, (meth)acrylate, alkyl polyalkoxy (meth)acrylate, polyalkoxy allyl, vinyl sulfonic acid, sodium methallyl sulfonate, sulfonated styrene, allyloxybenzene sulfonic acid, vinyl phosphonic acid , linear or branched C₁-C₃₂ alkyl esters of acrylic acid, maleic acid, itaconic acid and methacrylic acid; linear or branched C₁-C₃₂ alkyl amides of acrylic acid, maleic acid, itaconic acid and methacrylic acid; benzyl (meth)acrylate, phenyl (meth)acrylate, benzyl ethoxylate (meth)acrylate, phenyl ethoxylate (meth)acrylate, 6-hydroxyhexyl (meth)acrylate, and styrene, alpha-methyl styrene, vinyl toluene, and p-chlorostyrene; vinyl acetate, vinyl butyrate, vinyl caprolate, vinyl valerate, vinyl hexanoate, vinyl caprolactam, vinyl pyridine, (meth)acrylonitrile, isobutylene, diisobutylene, polydimethylsiloxane polyalkoxy (meth)acrylate, silicone monomers, or a salt thereof or mixtures thereof.

14. A paint composition comprising:
A. water and/or an organic solvent;
B. at least one of a binder or a pigment; and
C. an additive comprising a first polymer that is the reaction product of:
(1) at least one ethylenically unsaturated monomer and
(2) a second reactant chosen from monosaccharides, disaccharides, oligosaccharides, polysaccharides and combinations thereof;
wherein the first polymer is present in an amount of from about 0.1 to about 20 weight percent actives based on a total weight of the paint composition.

15. A paint composition comprising:
A. water and/or an organic solvent;
B. at least one of a binder or a pigment; and
C. an additive comprising a second polymer having the structure (I): 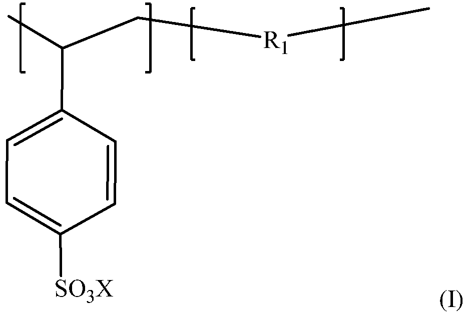
wherein R₁ is a residue from an ethylenically unsaturated monomer, R₁ can be present or absent, and X is H, a cation, or an amine;
wherein the second polymer is present in an amount of from about 0.1 to about 20 weight percent actives based on a total weight of the paint composition.
